# EUROPÄISCHE PATENTSCHRIFT

(11) **EP 2 452 799 B1**
(45) Veröffentlichungstag und Bekanntmachung des Hinweises auf die Patenterteilung: **17.05.2017**
(21) Anmeldenummer: 12000225.8
(22) Anmeldetag: 23.10.2008
(51) Int. Cl.: B29C 45/14, B29C 45/16, B29C 45/27

(54) **Verfahren zum Herstellen einer Bürste mittels Spritzguss**
Method of producing a brush using injection moulding
Procédé de fabrication d'une brosse moulée par injection

(30) Priorität: 24.10.2007 EP 07020803
(43) Veröffentlichungstag der Anmeldung: 16.05.2012
(62) Teilanmeldung aus: 08841206.9
(73) Patentinhaber: Trisa Holding AG, 6234 Triengen (CH)
(72) Erfinder: Pfenniger, Philipp, 6234 Triengen (CH)
(74) Vertreter: Schaad, Balass, Menzl & Partner AG

(56) Entgegenhaltungen:
- EP-A1- 1 987 936
- DE-A1- 10 051 265
- DE-A1- 10 162 998
- DE-A1-102006 057 241
- JP-A- 2000 197 520
- US-A- 6 108 869
- US-B1- 6 749 788

## Beschreibung

Die vorliegende Erfindung betrifft ein Verfahren zum Herstellen einer Bürste für den Körperpflegebereich gemäss Anspruch 1.

Zur Reinigung von Zahnzwischenräumen werden, neben Zahnstochern oder Zahnseide, auch Zahnreinigungsgeräte mit auswechselbaren Interdental-Behandlungsteilen, z. B. in Form eines, von einem Stiel getragenen, Behandlungskopfs verwendet. Zahnreinigungsgeräte mit auswechselbaren Interdental-Behandlungsteilen bieten den Vorteil, dass der Handgriff mit dem Befestigungselement für mehrere Anwendungen genutzt werden kann, währenddessen lediglich das Interdental-Behandlungsteil ersetzt wird.

Alternativ kann das Interdental-Behandlungsteil während der Herstellung auch unlösbar mit dem Handgriff verbunden werden. Aus der US 4'691'404 und US 5'882'584 sind Zahnreinigungsgeräte bekannt, bei denen das Interdental-Behandlungsteil unlösbar mit dem Handgriff verbunden ist. Zur Verankerung des Interdental-Behandlungsteils ist dessen Stiel aus Draht vorzugsweise mittels Spritzguss umspritzt. Alternative Verankerungsverfahren sind das Einkleben des Stiels in ein Sackloch des Handgriffs oder das Verankern des Stiels mittels Ultraschall oder thermischer Einwirkung.

Ein Zahnreinigungsgerät mit austauschbarem Interdental-Behandlungsteil ist zum Beispiel aus der DE-A-101 62 998 bekannt. Es weist einen Handgriff auf, der ein Interdental-Behandlungsteil aufnehmen kann. Der Stiel des Interdental-Behandlungsteiles ist in Längsrichtung des Handgriffs einlegbar. Ein Befestigungselement ist mit dem Handgriff schwenkbar verbunden. Durch das Schwenken des Befestigungselements in den geschlossenen Zustand wird der Stiel des Interdental-Behandlungsteiles gebogen und fixiert.

Aus der DE 10 2006 057241 A1 ist Maschine zum Herstellen von gedrehten Bürsten, wie etwa Interdentalbürsten, Mascarabürsten oder medizinischen Bürsten bekannt, die ein aus Drahtabschnitten gedrehtes Trägerteil mit einem kopfseitigen Borstenbesatz und einer griffseitigen Umspritzung als Griff aufweisen. Die Maschine ist als Fertigungseinheit mit einer Bürsten-Drehmaschine zum Drehen von das Trägerteil sowie den kopfseitigen Borstenbesatz aufweisenden Bürsten-Rohlingen mit einer Fertigbearbeitungseinrichtung sowie mit einer Transporteinrichtung zum Transportieren der Bürsten-Rohlinge von der Bürsten-Drehmaschine zu der Fertigbearbeitungseinrichtung ausgebildet.

Weitere Zahnreinigungsgeräte sind aus US 5,283,924, EP 1 743 547 und US 5, 934, 295 bekannt. Bei den aus diesen Dokumenten bekannten Zahnreinigungsgeräten wird der Stiel des Interdental-Behandlungsteils jeweils auf eine ähnliche Art eingeklemmt, wie beispielsweise mit einer Kappe, die über den Handgriff gestülpt wird. Im geschlossenen Zustand klemmt das Befestigungselement den Stiel des Interdental-Behandlungsteiles satt fest.

Üblicherweise besteht der Stiel aus einem Draht aus zwei verdrillten Strängen und der Stiel weist einen Stiel-Durchmesser von ca. 0.48 mm bis 0.75 mm auf. Zur Reinigung enger Zahnzwischenräume besteht das Bedürfnis einen Draht kleineren Durchmessers und somit einen Stiel mit einem geringeren Stiel-Durchmesser einzusetzen. Dies führt zum Problem, dass bekannte Handgriffe für Interdental-Behandlungsteile nicht mehr verwendet werden können bzw. das Interdental-Behandlungsteil nicht mehr sicher zwischen dem beweglichen Befestigungselement und dem Handgriff fixiert werden kann. Ein weiteres Problem kleinerer Stiel-Durchmesser besteht in der reduzierten Bruchresistenz bei Wechselbiegungen, welche beim Einsatz von Interdental-Behandlungsteilen zwangsläufig vorkommen.

Der vorliegenden Erfindung liegt die Aufgabe zu Grunde, ein Verfahren, welches das Herstellen einer Bürste für den Körperpflegebereich auf besonders effiziente Weise ermöglicht und ein entsprechendes Spritzgusswerkzeug zu schaffen. Diese Aufgabe wird erfindungsgemäss mit einem Verfahren gemäss Anspruch 1 gelöst.

Bevorzugte weitere Ausführungsformen der Erfindung ergeben sich aus den abhängigen Ansprüchen.

Für die Ausführung des erfindungsgemässen Verfahrens und für Zahnreinigungsgeräte und Interdental-Behandlungsteile wird ein Draht verwendet.

Ein Stieldurchlass dient einerseits dem Halten eines Interdental-Behandlungsteils und Verhindern des Austretens von in eine Kavität eingespritztem Kunststoff und andererseits als Führung bei einer Hubbewegung des mittels des Kunststoffs hergestellten Halteteils beziehungsweise Handgriffs zusammen mit dem Interdental-Behandlungsteil. Diese Hubbewegung erlaubt das einfache Entformen, selbst wenn am Halteteil beziehungsweise Handgriff eine, einen um den Draht herum verlaufenden Ringspalt bildende Vertiefung ausgebildet wird. Das erfindungsgemässe Verfahren erlaubt insbesondere die Herstellung eines Zahnreinigungsgeräts. Bei einem Zahnreinigungsgerät stellt der Ringspalt und der diesen radial aussen begrenzende Handgriff sicher, dass bei Wechselbiegungen der Biegeradius, verglichen mit einem Biegeradius, wie er auftritt, wenn der Draht einfach ohne weitere seitliche Stütze aus dem Handgriff austritt, gross ist oder sich die Biegung auf zwei oder mehrere Biegebereiche mit je reduziertem Biegewinkel aufteilt. Dadurch wird das Wechselbiegeverhalten und somit die Lebensdauer wesentlich verbessert.

Das Befestigungselement im geschlossenen Zustand und der Handgriff als Gegenstück fixieren das Interdental-Behandlungsteil beim Zahnreinigungsgerät. Da der Draht, aus dem der Stiel gefertigt ist, in einem Abschnitt des Stiels mindestens doppelt geführt ist, kann ein Herausziehen verhindert werden. Der Abschnitt mit wenigstens doppelt geführtem Draht erlaubt die sichere Fixierung des Interdental-Behandlungsteiles an Handgriffen und Befestigungselementen, welche für Interdental-Behandlungsteile mit einem Stiel aus dickerem Draht vorgesehen sind. Das Zusammenwirken eines freien Endes des Drahtes, aus dem der Stiel gefertigt ist, mit einer Anschlagsfläche des Befestigungselementes im geschlossenen Zustand und/oder des Handgriffes verhindert ein Herausziehen des Interdental-Behandlungsteiles. Das freie Ende des Drahtes wirkt dabei wie ein Widerhaken.

Die erwähnten Vorteile gelten auch für Interdental-Behandlungsteile, welche vorzugsweise mittels Umspritzen unlösbar in einem Handgriff beziehungsweise einem Halteteil verankert sind.

In besonders bevorzugten Ausführungsformen ist der Draht, aus welchem der Stiel des Interdental-Behandlungsteil gefertigt ist, zu zwei Strängen umgebogen, welche verdrillt sind. Der Drahtabschnitt besteht vorzugsweise aus einem Stahl, welcher Eisen, Kohlenstoff, Silizium, Mangan, Schwefel, Chrom, Stickstoff und Nickel enthält und ist mit einer Beschichtung oder Lackierung versehen. Bei weiteren bevorzugten Ausführungsformen ist die Beschichtung des Drahtes bzw. der Stränge bei Gebrauch des Zahnreinigungsgerätes mindestens teilweise in Wasser oder Speichel auflösbar und setzt dabei Wirkstoffe frei oder ist als Matrix für freisetzbare Wirkstoffe ausgebildet. Vorzugsweise werden dazu wasserlösliche, extrudierbare thermoplastische Polymere eingesetzt.

Die Erfindung wird im Folgenden anhand in der Zeichnung auszugsweise und teilweise schematisch dargestellten Ausführungsbeispielen näher erläutert.

Es zeigen rein schematisch:
- Fig. 1: eine perspektivische Ansicht eines, Stand der Technik gemäss der DE-A-101 62 998 bildenden, Zahnreinigungsgeräts im geöffneten Zustand;
- Fig. 2: eine perspektivische Ansicht eines Interdental-Behandlungsteiles für ein Zahnreinigungsgerät;
- Fig. 3: eine perspektivische Ansicht eines Zahnreinigungsgerätes mit eingeführtem, auswechselbarem Interdental-Behandlungsteil mit geradem Stiel;
- Fig. 4: eine weitere perspektivische Ansicht des Zahnreinigungsgerätes gemäss Fig. 3 mit eingeführtem Interdental-Behandlungsteil mit gebogenem Stiel;
- Fig. 5: einen Längsschnitt durch das Zahnreinigungsgerät gemäss Fig. 3 und 4 mit eingeführtem Interdental-Behandlungsteil mit gebogenem Stiel im geschlossenen Zustand;
- Fig. 6: in perspektivischer Darstellung einen Teil eines Zahnreinigungsgeräts, bei welchem der Draht des Interdental-Behandlungsteils mit einem Kunststoff des Handgriffs umspritzt ist;
- Fig. 7: teilweise im Längsschnitt ein Zahnreinigungsgerät ähnlich jenem gemäss Fig. 6, wobei jedoch der Handgriff einen schlauchartigen, den Draht umfassenden Vorsprung aufweist;
- Fig. 8: in gleicher Darstellung wie Fig. 7 ein ähnliches Zahnreinigungsgerät, wobei der Handgriff beim Austritt des Drahtes eine Vertiefung aufweist;
- Fig. 9: in perspektivischer Darstellung einen Teil einer Werkzeugleiste eines Spritzgusswerkzeugs mit einen Stieldurchlass und einen ersten Kavitätsabschnitt einer Kavität bildenden Werkzeugleiste;
- Fig. 10: in gleicher Darstellung wie Fig. 9 den Teil der Werkzeugleiste mit einem darin eingesetzten Interdental-Behandlungsteil;
- Fig. 11: in Ansicht den Teil der Werkzeugleiste gemäss Fig. 9 und 10 mit eingesetztem Interdental-Behandlungsteil, wobei die Werkzeugleiste an einem Kavitätskörper des Spritzgusswerkzeugs satt anliegt;
- Fig. 12: in Ansicht einen Teil eines mittels des Spritzgusswerkzeugs gemäss Fig. 9 bis 11 hergestellten Zahnreinigungsgerätes;
- Fig. 13: in Ansicht einen Teil des Zahnreinigungsgeräts gemäss Fig. 7 mit dem schlauchartigen, den Draht umhüllenden Fortsatz des Handgriffs;
- Fig. 14: in Ansicht einen Teil der Werkzeugleiste für die Herstellung des Zahnreinigungsgeräts gemäss Fig. 7 und 13;
- Fig. 15: in Ansicht einen Teil des Zahnreinigungsgerätes gemäss Fig. 8 mit einer Vertiefung im Handgriff beim Austritt des Drahtes; und
- Fig. 16: in gleicher Darstellung wie Fig. 14 einen Teil einer Werkzeugleiste für die Herstellung des Zahnreinigungsgerätes gemäss Fig. 8 und 15.

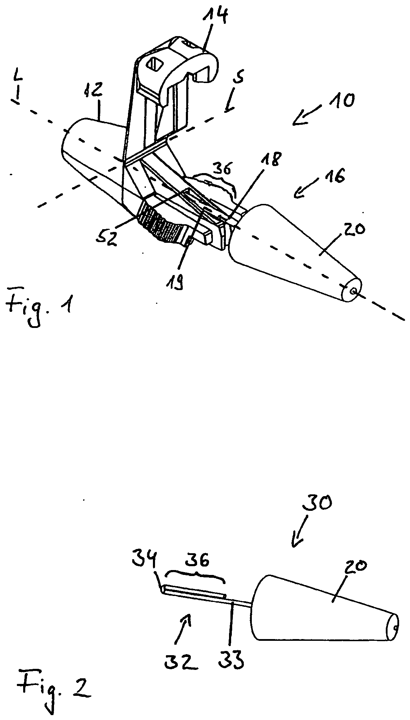

Fig. 1 zeigt beispielhaft in perspektivischer Ansicht ein, aus der DE-A-101 62 998 bekanntes, Zahnreinigungsgerät 10. Die folgenden Ausführungen gelten analog auch für andere Zahnreinigungsgeräte beispielsweise aus den in der Einleitung angeführten Druckschriften US 5,283,924, EP 1 743 547 und US 5,934,295, welche ebenfalls mit einem beweglichen Befestigungselement 14 zur Fixierung eines Stiels 18 eines Interdental-Behandlungsteils 16 ausgerüstet sind. Diese Druckschriften sind als Referenz hinzugefügt. Ein teilweise gezeigter Handgriff 12 definiert eine Längsachse L und weist das im vorliegenden Fall schwenkbare Befestigungselement 14 auf, welches um eine, als Filmscharnier ausgeführte, Schwenkachse S geschwenkt werden kann. Das Befestigungselement 14 ist im geöffneten Zustand gezeigt.

Das Interdental-Behandlungsteil 16 weist einen bekannten Stiel 18 und einen von diesem getragenen Behandlungskopf 20 auf. Der Behandlungskopf 20 ist in Fig. 1 als Bürste gezeigt. Der Behandlungskopf 20 kann aber auch als ein beliebiges anderes Element zur Reinigung der Zahnzwischenräume ausgebildet sein. Ein Einlegeabschnitt 36 des bekannten Stiels 18 lässt sich in Richtung der Längsachse L des Handgriffs 12 in eine Einlegenut 19 des Handgriffs 12 einlegen und in ein Sackloch 52 einfahren. Durch Schwenken des Befestigungselementes 14 in den geschlossenen Zustand wird der bekannte Stiel 18 rechtwinklig verbogen und am Handgriff 12 fixiert. Bezüglich Aufbau und Funktionsweise sei ausdrücklich auf die DE-A-101 62 998 verwiesen und deren Offenbarung per Referenz hiermit hinzugefügt.

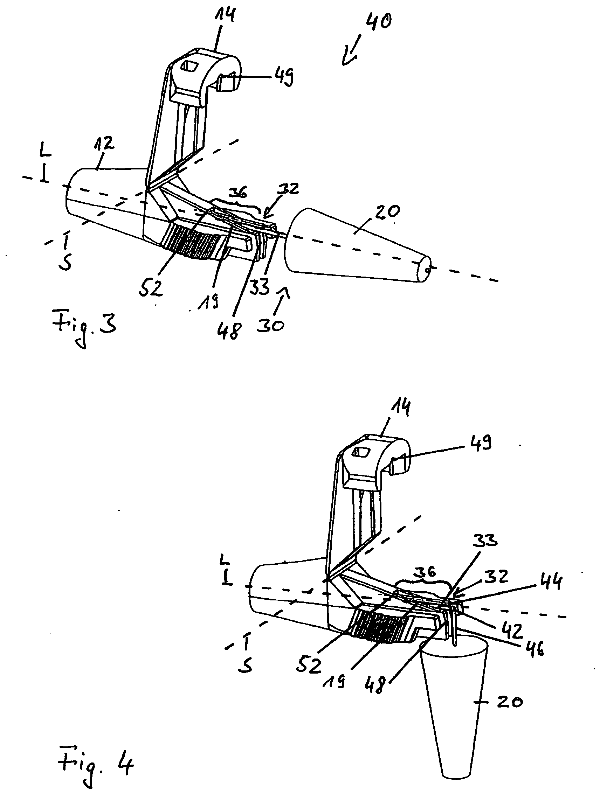

Fig. 2 zeigt eine perspektivische Ansicht eines Interdental-Behandlungsteiles 30 für ein Zahnreinigungsgerät 40 (siehe auch Fig. 3 bis 5). Das Interdental-Behandlungsteil 30 erlaubt die Verwendung von Handgriffen 12 und Befestigungselementen 14, welche für Interdental-Behandlungsteile 16 mit bekanntem Stiel 18 vorgesehen sind. Das Interdental-Behandlungsteil 30 weist einen, als Bürste ausgeführten, Behandlungskopf 20 und einen Stiel 32 auf. Der Stiel 32 ist aus Draht 33 gefertigt, welcher einen kleineren Durchmesser aufweist, als der Draht des Stiels 18 des bekannten Interdental-Behandlungsteils 16. Ein vom Behandlungskopf 20 abgewandter Endabschnitt des Drahtes 33 ist um einen Winkel von grösser 90°, vorzugsweise um einen Winkel zwischen 160° und 180°, am meisten bevorzugt um 180°, umgelegt. Der Draht 33 bildet so ein umgebogenes Ende 34 des Stiels 32. Die Länge des umgebogenen Endabschnitts des Drahtes 33 definiert die Länge des doppelt mit Draht 33 geführten Abschnitts 36, welcher auch den Einlegeabschnitt 36 bildet. Der Einlegeabschnitt 36 wird in den Handgriff 12 bei geöffnetem Zustand des Befestigungselementes 14 eingelegt.

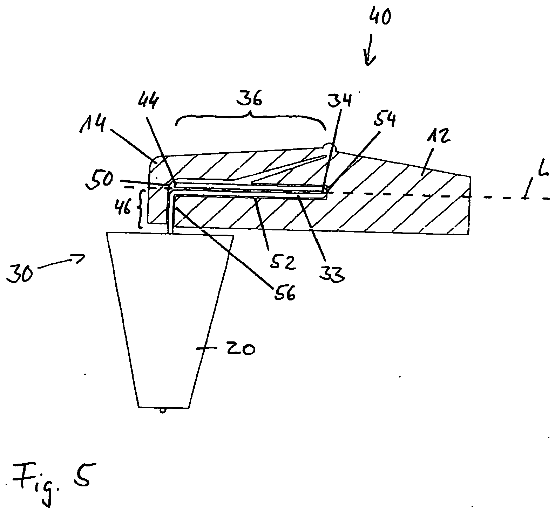

In Fig. 3 ist das Interdental-Behandlungsteil 30 zwischen dem Befestigungselement 14 im geöffneten Zustand und dem Handgriff 12 in die Einlegenut 19 des Handgriffs 12 in Richtung der Längsachse L eingelegt. Die Einlegenut 19 geht in ein Sackloch 52 (siehe auch Fig. 5) über. Der Einlegeabschnitt 36 befindet sich mindestens teilweise in dem Sackloch 52 und liegt mit dem umgebogenen Ende 34 wenigstens annähernd am Boden 54 des Sacklochs 52 an. Dadurch lässt sich das Interdental-Behandlungsteil 30 sicher und wohldefiniert in den Handgriff 12 einlegen. Zusätzlich wird das Interdental-Behandlungsteil 30 gehalten, wenn sich das Befestigungselement 14 im geöffneten Zustand befindet und erlaubt das Schwenken des Befestigungselementes 14 in den geschlossenen Zustand, ohne dass das Interdental-Behandlungsteil 30 mit einer Hand festgehalten werden muss. Der Behandlungskopf 20 steht entlang der Längsachse L über den Handgriff 12 hervor.

Fig. 4 zeigt das Zahnreinigungsgerät 40, nach dem das Befestigungselement 14 durch Schwenken um die Schwenkachse S in den geschlossenen und nachfolgend wieder in den geöffneten Zustand überführt wurde. Durch das Schliessen des Befestigungselements 14 wurde der Stiel 32 in einem zwischen dem Einlegeabschnitt 36 und dem Behandlungskopf 20 liegendem Biegeabschnitt 42 um wenigstens annährend 90°, vorzugsweise zwischen 60° und 90°, gebogen. Somit weist der Behandlungskopf 20 in eine Richtung zumindest annähernd rechtwinklig zur Längsachse L des Handgriffs 12. Ein freies Ende 44 des Drahtes 33 des Stiels 32 befindet sich beim Biegeabschnitt 42, sodass die Länge des Einlegeabschnitts 36 des Stiels 32 im Wesentlichen der Länge zwischen dem umgebogenen Ende 34 und dem Biegeabschnitt 42 entspricht. Das freie Ende 44 besteht aus den zwei Enden der verdrillten Stränge. Ein Stielabschnitt 46 zwischen dem Biegeabschnitt 42 und dem Behandlungskopf 20 liegt nun in einer Stirnnut 48 des Handgriffs 12. Die Stirnnut 48 verläuft rechtwinklig zur Einlegenut 19 und somit rechtwinklig zur Längsachse L. Das Befestigungselement 14 weist eine zur Stirnnut 48 komplementäre Nut 49 auf. Befindet sich das Befestigungselement 14 im geschlossenen Zustand, so bilden die Stirnnut 48 und die komplementäre Nut 49 einen Kanal 56 durch den der Stielabschnitt 46 geführt wird. (siehe auch Fig. 5).

Fig. 5 zeigt einen Längsschnitt durch ein Zahnreinigungsgerät 40. Das Befestigungselement 14 befindet sich im geschlossenen Zustand. Der Biegeabschnitt 42 ist um annährend 90° gebogen und der Behandlungskopf 20 zeigt in eine zur Längsrichtung L rechtwinklige Richtung. Der Einlegeabschnitt 36 und der Stielabschnitt 46 sind zumindest teilweise zwischen dem Handgriff 12 und dem Befestigungselement 14 eingeklemmt. Erst die doppelte Führung des Drahtes 33 im Einlegeabschnitt 36 erlaubt ein Festklemmen des Einlegeabschnittes 36 zwischen dem Handgriff 12 und dem Befestigungselement 14, welche für bekannte Stiele 18 ausgebildet sind.

Das freie Ende 44 des Drahtes 33 wirkt mit einer Anschlagsfläche 50 zusammen. Die Anschlagfläche 50 wird vom Boden der komplementären Nut 49 gebildet. Somit wird das Interdental-Behandlungsteil 30 zwischen Handgriff 12 und Befestigungselement 14 fixiert. Ein Herausrutschen des Interdental-Behandlungsteils 30 wird durch das Zusammenwirken des freien Endes 44 mit der Anschlagsfläche 50 verhindert. Die exakte Lage des freien Endes 44 bezüglich der Umfangsrichtung des Stiels 32 spielt keine Rolle. Ein Benutzer muss beim Einlegen des Interdental-Behandlungsteiles 30 in den Handgriff 12 nicht auf die Drehlage des Stiels 32 achten.

Die Einlegenut 19 und das Sackloch 52 erleichtern das Einlegen des Interdental-Behandlungsteils 30. Der doppelt geführte Einlegeabschnitt 36 wirkt mit dem Sackloch 52 genauso zusammen, wie der Einlegeabschnitt 36 eines bekannten Stiels 18 grösserer Dicke. Damit ist sicher gestellt, dass das Interdental-Behandlungsteil 30 im Handgriff 12 gehalten wird, bis es durch das Befestigungselement 14 im geschlossenen Zustand zwischen Handgriff 12 und Befestigungselement 14 fixiert ist. Um fabrikationsbedingte Längentoleranzen des Stiels 18 aufzufangen, wird vorgeschlagen, zwischen dem freien Ende 44 des Drahtes 33 und der Anschlagsfläche 50 ein Spiel vorzusehen. Vorzugsweise ist dieses Spiel kleiner 3mm, in weiter bevorzugter Weise kleiner 1 mm.

Durch das Zusammenwirken des freien Endes 44 mit der Anschlagfläche 50 ist es möglich, in einer nicht gezeigten weiteren Ausführungsform des Zahnreinigungsgerätes, einen anders ausgebildeten Handgriff mit einem anders ausgebildeten Befestigungselement so auszuführen, dass der Stiel 32 im geschlossenen Zustand des anders ausgebildeten Befestigungselementes nicht gebogen ist und der Behandlungskopf 20 in Richtung der Längsachse L zeigt. Das Interdental-Behandlungsteil 30 wird trotzdem sicher durch das Zusammenwirken des freien Endes 44 mit der Anschlagsfläche 50 fixiert.

In einer weiteren nicht gezeigten Ausführungsform ist es auch möglich, die Anschlagsfläche 50 am Handgriff 12 selbst auszubilden. Selbstverständlich kann die Anschlagfläche 50 durch ein anderes Element des Handgriffes 12 oder des Befestigungselementes 12 gebildet werden. Der Winkel des umgebogenen Drahtes 33 zusammen mit dem Sackloch 52 oder der Einlegegeometrie definiert schlussendlich die Position der Anschlagsfläche 50; bzw. diese Elemente sind direkt voneinander abhängig.

Der Schliessmechanismus des Befestigungselementes 14 am Handgriff 12 und weitere Ausführungsformen von Handgriffen und Befestigungselementen, die für ein Zahnreinigungsgerät 40 geeignet sind, sind in DE-A-101 62 998 beschrieben. Des weiteren kann das Interdental-Behandlungsteil 30 auch in Handgriffen Anwendung finden, die beispielsweise in US 5,283,924, EP 1 743 547 und US 5,934,295 offenbart sind.

Durch das Umbiegen des Drahtes 33 und dessen Zusammenspiel mit der Anschlagsfläche 50 kann ein massiv höheres Auszugsgewicht erreicht werden. Bei der Messung wird der Handgriff 12 gehalten und am Behandlungskopf 20 wird gezogen. Dabei ist das Auszugsgewicht für identische Draht-Durchmesser zwischen geradem Ende und umgebogenem Ende massiv unterschiedlich. Von der Norm werden 15 N Auszugsgewicht verlangt. Mit dem umgebogenen Ende werden Auszugsgewichte erreicht, die mindestens 1.5 mal so gross sind wie von der Norm gefordert, vorzugsweise mindestens 2 mal so gross sind.

Der Draht 33 des Interdental-Behandlungsteiles 30 wird vorzugsweise aus einem Drahtabschnitt hergestellt, welcher zu zwei Strängen umgebogen ist. Vorgebündelte Filamente werden in bekannter Art und Weise beim gebogenen Ende der zwei Stränge des umgebogenen Drahtabschnitts eingelegt und zugeschnitten. Anschliessend werden die zwei Stränge des umgebogenen Drahtabschnitts miteinander verdrillt. Für das Verdrillen werden 8 bis 20 Windungen pro cm, vorzugsweise 10 bis 15 Windungen pro cm ausgeführt. Nach dem Verdrillen werden die zwischen den Strängen fixierten Filamente profiliert d.h. auf jene Aussenform angepasst, die für die Reinigung optimal ist. Dadurch entsteht ein, als Bürste ausgeführter, Behandlungskopf 20, welcher von einem Stiel 32 getragen wird, welcher aus einem Draht 33 aus zwei verdrillten Strängen gefertigt ist. Selbstverständlich kann die vorliegende Erfindung auch für alternative Behandlungsköpfe (beispielsweise aus Schaumstoff, Gummi, Kunststoff etc.) oder Stielen aus Draht mit nur einem oder mehr als zwei Strängen eingesetzt werden.

Nach dem Verdrillen der Stränge wird zur Herstellung eines Interdental-Behandlungsteils 30 der vom Behandlungskopf 20 abgewandte Endbereich des Drahtes 33 umgelegt. Das Biegen des Drahtes 33 wird vorzugsweise als weiterer, integrierter Arbeitschritt nach dem Eindrehen der Filamente auf der Eindrehmaschine zur Herstellung des Behandlungskopfes 20 durchgeführt. Bei alternativen Behandlungsköpfen 20 kann das Umbiegen des Drahtes 33 vor oder nach dem Anbringen des Behandlungskopfes 20 am Stiel 32 passieren. Das Umbiegen passiert analog dem Umbiegen des Drahtes aus zwei verdrillten Strängen. So entsteht ein zwischen 5 mm und 25 mm vorzugsweise zwischen 7 mm und 15 mm langer doppelt mit Draht 33 geführter Einlegeabschnitt 36 des Stiels 32.

Der Handgriff 12 mit dem mit einem Filmscharnier verbundenen schwenkbaren Befestigungselement 14, ist vorzugsweise aus einem nicht spröden Hartkunststoff, hergestellt. Falls das Befestigungselement 14 eine separate Einheit bildet, wird ebenfalls ein Hartkunststoff empfohlen. Ausserhalb des Mechanismus oder im Mechanismus in nicht-funktionalen Geometrien kann die Hartkomponente mit weiteren harten oder weichen Kunststoffkomponenten überspritzt werden. Als Hartkunststoff werden beispielsweise Polypropylen (PP), Polyester (PET), Polycyclohexandiamethanoltherephtalat (PCT/PCT-A (säuremodifiziert)/PCT-G (glykolmodifiziert)), Polyethylen (PE), Polystyrol (PS), Styrolacrylnitril (SAN), Polymethylmethacrylat (PMMA), Acrylbuthadienstyrol (ABS), Polyoxymethylen (POM) oder Polyamid (PA) usw., vorzugsweise Polypropylen (PP) eingesetzt. Das bevorzugt eingesetzte Polypropylen (PP) besitzt ein E-Modul von 1000 - 2400 N/mm², besonders bevorzugt von 1300 - 1800 N/mm². Als Weichkunststoff finden Polyvinylchlorid (PVC), Polyethylen (PE), mit tiefer Dichte (PE-LD, low density polyethelene) oder hoher Dichte (PE-HD, high density polyethelene), gummielastischer Werkstoff wie Polyurethan (PUR) oder insbesondere thermoplastische Elastomere (TPE) Anwendung. Vorzugsweise werden thermoplastische Elastomere eingesetzt. Die Shore A-Härte der weichen Komponente liegt vorzugsweise unter 90. Der Weichkunststoff kann eine zusätzliche Funktion zur Fixierung des Stiels 32 bereitstellen, indem der Weichkunststoff zumindest in einem Teilbereich den Stiel 32 berührt und damit eine Art Bremse bildet. Vorzugsweise bildet das Weichmaterial dabei einen verengenden Bereich um die Reibung gegenüber dem Stiel zu maximieren.

Die oben angegebenen Materialien und das oben beschriebene Verfahren zur Herstellung des Interdental-Behandlungsteils 30 gelten natürlich auch für Handgriffe 12, welche unlösbar mit dem Interdental-Behandlungsteils 30, vorzugsweise mittels Umspritzen des Stiels 32, verbunden werden.

Das fertige Interdental-Behandlungsteil 30 hat eine Gesamtlänge von 15 mm bis 45 mm, vorzugsweise von 25 mm bis 35 mm. Der Behandlungskopf 20 ist zwischen 8 mm und 20 mm lang, vorzugsweise zwischen 10 mm und 16 mm. Der Aussendurchmesser des Behandlungskopfes 20 beträgt zwischen 1 mm und 7 mm vorzugsweise zwischen 2 mm und 5 mm. Die Borstenspitzen eines, als Bürste ausgeführten, Behandlungskopfes 20 können eine zylindrische, konische oder beliebig gewellte Mantelfläche bilden. Für ein, als Bürste ausgeführtes, Interdental-Behandlungsteil 30 eignet sich als Borstenmaterial insbesondere Polytrimethylenterephtalat (PTT), Polyamid (PA) oder Polyester (PE), vorzugsweise Polyamid (PA). Die Borsten bestehen aus Filamenten mit einem Durchmesser zwischen 1 mil bis 6 mils, vorzugsweise zwischen 1.5 mils und 4 mils besonders bevorzugt 2.5 mils (wobei 1 mil = 0.0254 mm).

Neben den Interdental-Behandlungsteilen 30 mit geradem Stiel 32, welche gebogen werden, können ebenso Interdental-Behandlungsteile 30, welche in einem gleichen oder ähnlichen Befestigungsmechanismus eingebracht werden, jedoch bereits vor dem Einbringen in den Mechanismus in einem Biegeabschnitt 42 gebogen sind, Anwendung finden. Es können neben den Stielen 32 mit einmal umgebogenen Endbereich auch Stiele 32, welche aus einem Draht 33 gefertigt sind, der mehrfach gebogen ist, das heisst, wo im Einlegeabschnitt 36 der Draht mehr als 2-fach geführt ist, verwendet werden. So kann der Draht im Einlegeabschnitt beispielsweise 3-fach geführt sein. Er kann dann im Einlegeabschnitt 36 zum Beispiel die From eines Z haben.

Die Idee kann ebenso für andere Bürsten vorgesehen werden, welche im Körperpflegebereich Anwendung finden und von kleineren Stieldurchmessern profitieren. Als Beispiel hierfür seien Maskara-Bürsten genannt.

Der die Stränge bildende Drahtabschnitt, von welchem bei der Herstellung des Interdental-Behandlungsteils 30 ausgegangen wird, weist vor dem Verdrillen einen Durchmesser von vorzugsweise kleiner oder maximal gleich 0.25 mm auf. Der Gesamtdurchmesser des Drahts 33 aus einem oder mehrer verdrillten Strängen beträgt mitsamt der Beschichtung vorzugsweise weniger als 0.47 mm.

Der Draht 33 bzw. der Drahtabschnitt besteht vorzugsweise aus Stahl, welcher Eisen (Fe), Kohlenstoff (C), Silizium (Si), Mangan (Mn), Schwefel (S), Chrom (Cr), Nickel (Ni) und Stickstoff (N) enthält. Der Mangangehalt ist vorzugsweise kleiner als 2 Gewichtsprozent und der Nickelgehalt liegt vorzugsweise zwischen 7 und 12 Gewichtsprozent. Auch die Verwendung von nickelfreien Stählen, wie sie in der EP 1 470 765 beschrieben sind, ist möglich. Ebenso können Stähle, wie sie in EP 0 800 781 beschrieben sind, verwendet werden. Diese beiden Schriften werden hiermit explizit referenziert.

Vorzugsweise liegt der Kohlenstoffgehalt des Stahls zwischen 0.03 und 0.15, insbesondere zwischen 0.03 und 0.07 Gewichtsprozent, der Siliziumgehalt zwischen 0.3 und 0.6, insbesondere zwischen 0.3 und 0.4 Gewichtsprozent, der Schwefelgehalt kleiner 0.01 Gewichtsprozent, der Chromgehalt liegt zwischen 16 und 19 Gewichtsprozent und der Stickstoffgehalt liegt zwischen 0.02 und 0.05 Gewichtsprozent, die Gewichtsanteile von Mangan und Nickel sind vorgängig angegeben. Es sind aber auch andere bekannte Stahllegierungen möglich bzw. die Kombination von verschiedenen Gewichtsanteilen der üblichen Stahlbestandteile, so dass ein stabiler und flexibler Stiel 32 für ein Interdental-Behandlungsteil 30 daraus hergestellt werden kann. Diese Legierungen erlauben es gleichzeitig den Eindrehprozess rationell durchzuführen und den Draht anschliessend entsprechend der Fig. 2 abzubiegen.

Vorzugsweise ist der Draht 33 bzw. der Drahtabschnitt ein- oder mehrfach beschichtet. Für die Beschichtung eignen sich Elektroisolierlacke, wie beispielsweise Polyurethan (PUR) besonders gut. Daneben sind auch Beschichtungen aus Polytetrafluorethylen (PTFE)/Teflon gut geeignet. Trägermaterialien, die sich bei Gebrauch des Zahnreinigungsgerätes 40 beispielsweise unter Einwirkung von Speichel oder Wasser teilweise auflösen und dabei insbesondere Wirksubstanzen freisetzen oder den Benutzungsgrad des Interdental-Behandlungsteils 30 anzeigen oder als Trägermatrix für freizusetzende Wirkstoffe dienen, stellen weitere Möglichkeiten für Beschichtungen dar. Neben einer schonenden Reinigung kann mit diesen Beschichtungen auch der Reibungskoeffizient zwischen dem Stiel 18 und Handgriff 11 bzw. dem Befestigungselement 14 angepasst werden.

Schichtdicken der Beschichtungen sind üblicherweise kleiner 20 µm und liegen vorzugsweise im Bereich zwischen 5 µm und 10 µm.

Die Beschichtung dient als elektrische Isolation und gegebenenfalls als Gleitoberfläche. Die elektrische Isolation verhindert den sogenannten galvanischen Schock bei Berührung von Metall und Zahn. Bei nickelhaltigen Stählen wird durch die Beschichtung zusätzlich eine mögliche allergische Reaktion verhindert, da das Austreten von Nickel mittels der Beschichtung minimiert oder gar verhindert wird.

Als Wirksubstanzen, die in die Beschichtung eingebracht werden, können Inhaltstoffe mit einer zahnpastaähnlichen Wirkung, wie zum Beispiel Sorbitol, Aromen, Hydrated Silica, Sodium Lauryl Sulfate, Triclosan, Glycerin, Sodium Saccharin, Propylene Glycol, Disodium Phosphate, Alumina, Trisodium Phosphate, Monofluorophosphate, Sodium Flouride, Betaine, Titanium Dioxide, Cellulose Gum, Tetrasodium Pyrophosphate, Kreatin, Zink Sulfate, Amin Fluorid, Natrium Fluoride (NaF), oder ähnliche verwendet werden.

Es können auch antibakterielle Wirkungen mit Hilfe von Inhaltsstoffen wie Sodium Bicarbonat, Citric Acid, Phosporic Acid, Sodium Carbonate, Potassium Carbonate, Sodium Perborate, Sodium Hexametaphosphate, Sodium Benzoate, Sodium Stereate und/oder ähnlichen Stoffen erzeugt werden.

Zusatzstoffe, wie Glucose, Maltrodextrin, Magnesium Sterate, Aroma, Saccharin, Microcrystaline Cellulose und ähnliche Mittel, welche den Plaque einfärben und somit den Putzerfolg anzeigen, können ebenso verwendet werden, wie Mittel zur Zahnbleichung, wie zum Beispiel wasserstoffperoxidhaltige Stoffe.

Zur Beschichtung ebenso geeignet sind Kombinationen von untereinander verträglichen Wirksubstanzen, welche vorgängig genannt sind.

Als Trägermaterial für die Wirksubstanzen, die sich nicht direkt auf den Draht 33 bzw. Drahtabschnitt auftragen lassen, können zum Beispiel biologisch abbaubare Substanzen auf Stärke-Basis oder andere geeignete Kunststoffe verwendet werden, welche mit den Inhaltsstoffen chemisch nicht reagieren. Zum Beispiel eignet sich auch ein wasserlösliches Kunstharz auf Basis von Polyethylenoxid-Polymeren, welches eine Matrix für eine Wirksubstanz bildet oder Polyethylenglykol (PEG). Selbstverständlich können als Träger für Wirksubstanzen auch andere wasserlösliche, extrudierbare thermoplastische Kunststoffe verwendet werden.

Die verschiedenen Beschichtungen können mittels unterschiedlicher Methoden aufgetragen werden. Eine Möglichkeit stellt das Anspritzen der Beschichtung dar, der Kunststoffmantel wird mittels Spritzguss auf den Draht oder Drahtabschnitt aufgetragen. Eine weitere Methode ist die Extrusion der Beschichtung. Der Draht wird durch eine Matrize gezogen und gleichzeitig wird die Beschichtung mittels Extrusion auf dem Draht aufgetregen.

Die Beschichtungen, das heisst die Lacke und auch die anderen Substrate, können eingefärbt sein. Die Einfärbung wie auch die Beschichtung wird vorzugsweise mit nicht toxischen, speichelechten, nicht migrierenden, lebensmitteltauglichen Farben / Materialien vorgenommen.

Es ist möglich, dass der Draht mit mehreren Beschichtungen versehen wird. Dies kann in einem oder mehreren sequentiellen Prozessen durchgeführt werden. Beispielsweise kann der Draht über einer innere Beschichtung aus einer nicht wasserlöslichen Schicht (beispielsweise Polyurethan oder Polytetrafluorethylen) eine äussere wasserlösliche Schicht (beispielsweise Polyethylenoxid-Polymeren oder Polyethylenglykol) mit darin enthaltenen Wirksubstanzen aufweisen.

Der Draht mit der beschriebenen Drahtzusammensetzung und die beschriebenen Beschichtungsmöglichkeiten für Drähte können auch in beliebigen anderen Zahnreinigungsgeräten eingesetzt werden. Insbesondere ist auch ein Einsatz des Drahtes im Zusammenhang mit direkt am Stiel 32 angespritzten Kunststoffpartien, beispielsweise direkt angespritzten Griffen oder Griffpartien, denkbar.

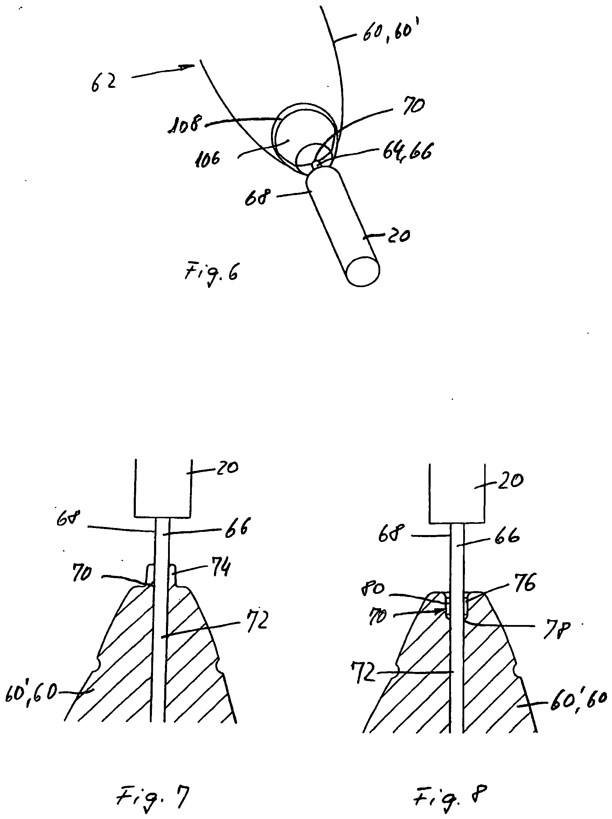

Fig. 6 zeigt einen Teil eines Handgriffs 60 eines weiteren Zahnreinigungsgeräts 62, wobei der den Stiel 64 bildende Draht 66 mit dem aus Kunststoff gefertigten Handgriff 60 unlösbar verbunden ist. Der den Behandlungskopf 20 tragende und zusammen mit diesem das Interdental-Behandlungsteil 68 bildende Draht 66, besteht vorzugsweise aus demselben Material und weist vorzugsweise dieselben Durchmesser auf, wie weiter oben beschrieben. Überdies kann der Draht 66 gleich beschichtet sein, wie weiter oben offenbart. Im Handgriff 60 kann der Draht 66 zurückgebogen sein, wie dies in der Fig. 2 gezeigt ist, es ist jedoch auch denkbar, dass er keine derartige Biegung aufweist.

Der Handgriff 60 weist in den in den Fig. 6 bis 16 gezeigten Ausführungsformen eine tropfenartige Form auf, wobei zwei einander gegenüberliegende Seiten vorzugsweise abgeflacht sind, so dass der Handgriff 60 mittels Daumen und Zeigefinger zuverlässig gehalten werden können. Die folgenden Ausführungen gelten analog wenn an Stelle des Handgriffs 60 ein Halteteil 60' tritt, das dazu bestimmt ist, von einem Handgrifforgan unlösbar oder lösbar gehalten zu werden.

Bei der in Fig. 6 gezeigten Ausführungsform ist der Handgriff 60 bei der Austrittstelle 70 des Drahts 66 aus dem Handgriff 60 leicht konvex, nahezu eben geformt, wobei der Draht 66 im Wesentlichen rechtwinklig zur Oberfläche des Handgriffs 60 aus diesem austritt.

Während des Reinigungsvorgangs wird der Interdental-Behandlungsteil 68 und besonders dessen Draht 66 bei der Austrittstelle 70 infolge der sehr vielen Wechselbelastungen stark beansprucht, was die Gefahr eines Ermüdungsbruchs des Drahts 66 mit sich zieht. Wird der dünne Draht mit Wechselbelastungen beaufschlagt, wie sie bei der Reinigung von Interdental-Räumen auftreten, kann der Draht 66 bei der Austrittsstelle 70 um ca. 80° bis 90° mit einem Radius gebogen werden, welcher in der Regel kleiner ist als 1 mm, vielfach kleiner als 0.5 mm. Dieses nahezu Knicken des Drahtes kann schon nach einer geringen Anzahl von Reinigungszyklen, beispielsweise von 3 bis 6 Zyklen, zum Bruch des Drahtes 66 führen.

Um dies zu verhindern, wird der Handgriff 60 vorzugsweise derart ausgebildet, wie dies in den Fig. 7 und 8 dargestellt ist. Diese Ausführungsformen verhindern ein Knicken des Drahtes bei der Austrittstelle in dem sie bei den Wechselbelastungen zu einem grösseren Biegeradius des Drahtes oder zu mehreren Biegestellen mit kleineren Biegewinkeln führen.

Der den Behandlungskopf 20 tragende und beispielsweise aus zwei verdrillten Strängen gebildete Draht 66 verläuft geradlinig in den Handgriff 60 hinein und ist in einem in diesem sich befindenden Befestigungsabschnitt 72 von einem den Handgriff 60 bildenden Kunststoff umspritzt und festgehalten. Der Handgriff 60 weist dieselbe Form auf wie im Zusammenhang mit der in der Fig. 6 gezeigten Ausführungsform beschrieben, wobei nun jedoch ein hülsen- oder schlauchartiger Fortsatz 74 des Handgriffs 60 den Draht 66 bei dessen Austrittstelle 70 umschliesst. Dieser hülsen- beziehungsweise schlauchartige Fortsatz 74 wird durch umspritzen des Drahtes 66 mit einem Hartkunststoff oder Weichkunststoff, wie er weiter oben offenbart ist, beim Spritzgiessen des Handgriffs 60 hergestellt. Der somit am Draht 66 anliegende Fortsatz 74 weist eine viel geringere Biegesteifigkeit auf, als der übrige Kunststoffkörper des Handgriffs 60. Der Fortsatz steht um eine Länge von etwa 0.5 mm bis 4 mm vorzugsweise von 0.8 mm bis 1.6 mm über dem Kunststoffkörper des Handgriffs 60 vor. Der Aussendurchmesser des Fortsatzes 74 beträgt ca. 0.4 mm bis 1.3 mm, vorzugsweise 0.5 mm bis 1.1 mm.

Durch diese Ausführungsform mit einem Fortsatz 74 wird erreicht, dass der Draht bei und benachbart zur Austrittstelle 70 flexibel geführt ist. Der flexible Fortsatz 74 wird bei der Wechselbeanspruchung des Interdental-Behandlungsteils 68 ebenfalls belastet, wobei er sich mit dem Draht zusammen - geringfügig - biegt und dadurch eine Art Knautschzone bildet, welche den Biegeradius des Drahtes 66 gegenüber der in der Fig. 6 gezeigten Ausführungsform auf wenigstens 1.2 mm, vorzugsweise wenigstens 1.6 mm erhöht.

Es ist auch möglich, den Fortsatz 74 in Richtung gegen sein freies Ende hin sich verjüngend auszubilden, beispielsweise konisch mit einem Winkel vorzugsweise zwischen 10° und 40°. Der Fortsatz 74 hat dabei an seinem Fusse, beim Übergang in den Kunststoffkörper des Handgriffs 60 einen Aussendurchmesser von 0.7 mm bis 1.5 mm, vorzugsweise von 0.9 mm bis 1.2 mm und an seinem Ende einen Aussendurchmesser beispielsweise von 0.4 mm bis 0.9 mm vorzugsweise von 0.5 mm bis 0.7 mm.

Eine besonders bevorzugte Ausführungsform des Handgriffs 60 bei der Austrittstelle 70, welche die Ermüdungsbruchgefahr des Drahtes 66 gegenüber der in der Fig. 4 gezeigten Ausführungsform ebenfalls wesentlich herabsetzt, ist in Fig. 8 gezeigt. Der den Handgriff 60 bildende Kunststoffkörper weist bei der Austrittstelle 70 des Drahtes 66 eine Vertiefung 76 auf, an deren Grund 78 der Draht 66 aus dem Handgriff 60 austritt und welche einen um den Draht 66 herum verlaufenden Ringspalt 80 frei lässt. Bei Wechselbeanspruchungen wird der Draht beim Grund 78 nur geringfügig gebogen, weil bei grösserer Auslenkung der Draht 66 mindestens beim freien Endbereich der Vertiefung 76 an den Handgriff 60 zur Anlage gelangt, was insgesamt zu einem wesentlich grösseren Biegeradius von wenigstens 1.2 mm, vorzugsweise wenigstens 1.6 mm führt, als dies bei der Ausführungsform gemäss Fig. 6 der Fall ist. Dabei ist es möglich, dass der Draht 66 beim Grund 78 und beim freien Endbereich der Vertiefung 76 einen kleinen Biegeradius aufweist als dazwischen. Jedoch ist der Biegewinkel an diesen Stellen wesentlich kleiner als der Biegewinkel bei der Austrittstelle 70 der Ausführungsform gemäss Fig. 6 bei gleicher Auslenkung des Behandlungskopfs 20.

Hierbei ist es ebenfalls möglich, die Vertiefung 76 in Richtung zu ihrem freien Ende hin, sich konisch erweiternd auszubilden und somit den Draht 66 gegen das freie Ende der Vertiefung 76 hin kontinuierlich zunehmend mehr Raum zu bieten. Dabei kann die Vertiefung 76 konisch oder sich in der Art eines Trompetentrichters erweiternd ausgeführt sein.

Eine bevorzugte Form der Vertiefung 76 ist in der Fig. 8 gezeigt. Die Tiefe der Vertiefung 76, gemessen vom freien Ende des die Vertiefung 76 umgebenden Handgriffs 60 bis zum Grund 78, beträgt beispielsweise 0.5 mm bis 1.8 mm, vorzugsweise 0.6 mm bis 1.6 mm. In einem in gezeigten Ausführungsbeispiel kreiszylinderförmigen Mittelabschnitt hat die Vertiefung 76 eine lichte Weite von 0.4 mm bis 1 mm, vorzugsweise 0.5 mm bis 0.9 mm. Beim Grund 78, anschliessend an den Mittenabschnitt verengt sich die Vertiefung 76 bis zum Draht 66 hin mit einem Radius von vorzugsweise 1.8 mm bis 2.2 mm. In Richtung gegen das freie Ende hin und anschliessend an den Mittelabschnitt erweitert sich die Vertiefung 76 mit einem Radius beispielsweise zwischen 0.2 mm und 0.5 mm.

Um den Handgriff 60 selber etwas biegsamer auszugestalten kann anstelle des bevorzugt verwendeten harten Kunststoffs, insbesondere Polypropylen, auch ein Gemisch aus einem der weiter oben spezifizierten Hartkunststoffe und einem ebenfalls spezifizierten Weichkunststoff verwendet werden. Bevorzugt wird in diesem Fall ein Gemisch aus 60 bis 80 Volumenprozent Polypropelen und 20 bis 40 Volumenprozent thermoplastischem Elastomer (TPE) verwendet. Es ist auch denkbar, den Handgriff 60 aus Gründen der Biegsamkeit aus Polyethylen (PE) mit tiefer Dichte (PE-LD, low density polyethelene) oder hoher Dichte (PE-HD, high density polyethelene) herzustellen. Erfindungsgemäß wird der Handgriff 60 mittels Mehrkomponentenspritzguss hergestellt, wobei es denkbar ist, den Handgriff 60 beim Fortsatz 74, beziehungsweise bei der Vertiefung 76 aus einem weichelastischen Kunststoff und wenigstens Teile des verbleibenden Kunststoffkörpers aus einem Hartkunststoff zu fertigen oder umgekehrt. Es ist auch denkbar, den ansonsten aus einem Hartkunststoff gefertigten Handgriff in bestimmten Bereichen, insbesondere in Bereichen wo er mit der Hand beziehungsweise mit Fingern gehalten wird, zur Verbesserung der Haptik, mit einem Weichkunststoff zu versehen.

Bei den in den Fig. 7 und 8 gezeigten Ausführungsformen ist der Handgriff 60 bei der Austrittstelle 70, d.h. auch im Bereich des Fortsatzes 74 beziehungsweise der Vertiefung 76, zum Draht 66 achssymmetrisch ausgebildet. Von dieser Symmetrie kann auch abgewichen werden. Weiter kann auch der in den Fig. 3 bis 5 gezeigte Handgriff mit dem Befestigungselement 14, bei der Austrittstelle des Drahtes aus dem Handgriff 12, wie in Zusammenhang mit den Fig. 7 und 8 beschrieben, ausgeführt sein. Gleiches gilt für unterschiedlich aufgebaute Handgriffe zum auswechselbaren Halten von Interdental-Behandlungsteilen. Ein erfindungsgemässes Verfahren zum Herstellen eines einem Interdental-Behandlungsteil aufweisenden Zahnreinigungsgeräts, wie es in den Fig. 6 bis 8 offenbart ist, wird im Folgenden in Zusammenschau mit einem dazu geeigneten Spritzgusswerkzeug 90 erläutert. Das Spritzgusswerkzeug 90 kann - wie allgemein bekannt - geöffnet und geschlossen werden. Dazu weist es zwei Werkzeughälften auf, welche im geschlossenen Zustand in bekannter Art und Weise in einer Trennebene 92 aneinander anliegen. Das geschlossene Spritzgusswerkzeug 90 begrenzt mindestens eine Kavität 94, vorzugsweise jedoch eine Vielzahl von Kavitäten, in welche der Kunststoff, im vorliegenden Fall zur Bildung des Handgriffs 60, eingespritzt wird.

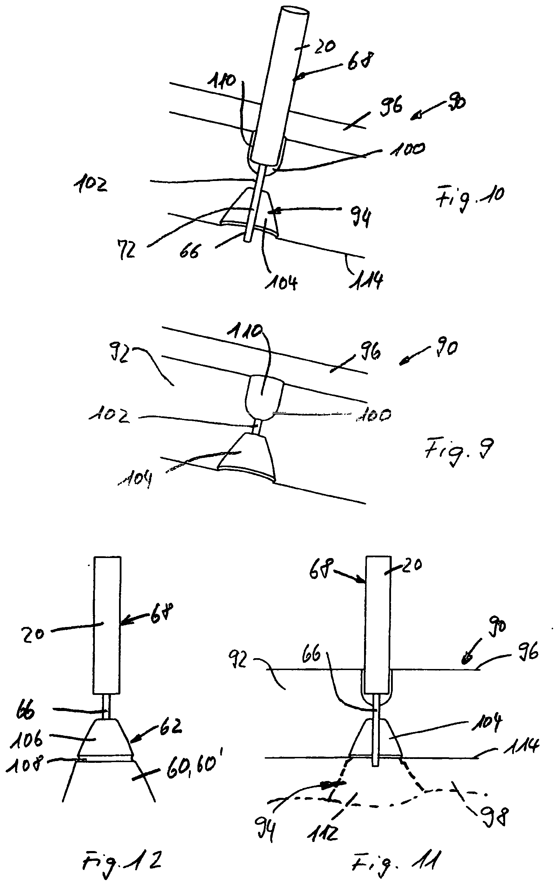

Der Einfachheit halber sind in den Fig. 9 bis 11, 14 und 16 nur der eine Teil der beiden im vorliegenden Fall zur Trennebene 92 symmetrischen Teile einer Klemmleiste 96 und eines Kavitätkörpers 98 des Spritzgusswerkzeugs 90 dargestellt.

Die Klemmleiste 96 gemäss den Fig. 9 bis 11 weist einen rechteckigen Querschnitt und einen durch sie hindurch verlaufenden Durchlass 100 auf. In bevorzugter Weise sind jedoch eine Vielzahl von identisch ausgebildeten Durchlässen 100 in einer Reihe hintereinander vorhanden um gleichzeitig eine entsprechende Anzahl Zahnreinigungsgeräte 62 herstellen zu können. Der Durchlass 100 ist zur Trennebene 92 symmetrisch ausgebildet und weist in einem Mittenabschnitt einen Stieldurchlass 102 auf, dessen Durchmesser auf den Durchmesser des Drahts 66 derart abgestimmt ist, dass beim Spritzgiessen kein Kunststoff zwischen dem Stieldurchlass 102 und dem Draht 66 hindurch aus der Kavität 94 heraus fliessen kann. Anschliessend an den Stieldurchlass 102 ist der Durchlass 100, einen ersten Kavitätsabschnitt 104 der Kavität 94 bildend, entsprechend der Form des Handgriffs 60 in einem die Austrittsstelle 70 aufweisenden Endbereich 106 geformt. Dieser Endbereich 106 erstreckt sich, im gezeigten Beispiel, vom dem Behandlungskopf 20 zugewandten Ende des Handgriffs 60 bis zu einer umlaufenden Nut 108 über ca. 3 mm Länge des Handgriffs 60. Diese Länge kann jedoch auch kürzer oder grösser gewählt sein. Weiter weist der Durchlass 100, anschliessend an den Stieldurchlass 102, auf der dem ersten Kavitätsabschnitt 104 abgewandten Seite eine Aufnahmeerweiterung 110 für den Behandlungskopf 20 des Interdental-Behandlungsteils 68 auf. Die Aufnahmeerweiterung 110 ist vorzugsweise derart ausgebildet, dass sie den in sie hineinragenden Teil des Behandlungskopfs 20, sowie den entsprechenden Abschnitt des Drahtes 66, mit seitlichem Spiel aufnehmen kann. Wie dies aus den Fig. 10 und 11 hervorgeht.

Zum Herstellen des Handgriffs 60 mittels Spritzguss wird die Klemmleiste 96 an den Kavitätskörper 98 in dichtende Anlage gebracht. Dabei kommt der an der Klemmleiste 96 ausgebildete erste Kavitätsabschnitt 104 in Flucht mit einem am Kavitätskörper 98 ausgebildeten zweiten Kavitätsabschnitt 112, wobei dieser zusammen mit dem ersten Kavitätsabschnitt 104 die Kavität 94 für den Handgriff 60 bilden.

Der Vollständigkeit halber sei erwähnt, dass der eine Teil der Nut 108 durch den ersten Kavitätsabschnitt 104 und der andere Teil durch den zweiten Kavitätsabschnitt 112 geformt wird. Die Anlageebene 114, in welcher die Klemmleiste 96 und der Kavitätskörper 98 aneinander anliegen, verläuft somit rechtwinklig zur mit dem Draht 66 zusammenfallenden Längsrichtung des Zahnreinigungsgeräts 62 und, in dieser Längsrichtung gesehen, etwa mittig durch die Nut 108.

Bei geöffneter Klemmleiste 96 wird der Draht 66 des Interdental-Behandlungsteils 68 derart in den Stieldurchlass 100 eingesetzt, dass er mit seinem Befestigungsabschnitt 72, welcher sich in einer Distanz zum Behandlungskopf 20 befindet, in die Kavität 94 hineinragt. Wie dies aus der Fig. 11 hervorgeht, durchgreift der Draht 66 mit seinem Befestigungsabschnitt 72 den ersten Kavitätsabschnitt 104 und reicht bis in den zweiten Kavitätsabschnitt 112 hinein. Bei geschlossener und am geschlossenen Kavitätskörper 98 anliegender Klemmleiste 96 wird in die Kavität 94 der Kunststoff eingespritzt, wodurch der Befestigungsabschnitt 72 des Drahts 66 umspritzt und der Handgriff 60 hergestellt wird. Nach mindestens teilweisem Aushärten des eingespritzten Kunststoffs können der Kavitätskörper 98 und die Klemmleiste 96 geöffnet und das fertige Zahnreinigungsgerät 62, d.h. der Handgriff 66 mit dem damit unlösbar verbundenen Interdental-Behandlungsteil 68 dem Spritzgusswerkzeug 90 entnommen werden.

Die Ausbildung des Spritzgusswerkzeugs 90 mit einer vom Kavitätskörper 98 separaten Klemmleiste 96 hat mehrere Vorteile. So kann die Klemmleiste 96 mit dem Interdental-Behandlungsteil 68, vorzugsweise mit einer Vielzahl von Interdental-Behandlungsteilen 68, in einer vom Kavitätskörper 98 getrennten Position bestückt werden. In vorteilhafterweise sind pro Kavitätskörper 98 mindestens zwei Klemmleisten 96 vorhanden, welche wechselweise mit Interdental-Behandlungsteilen 68 bestückt werden, beziehungsweise zur Herstellung des Handgriffs 60 in Anlage am Kavitätskörper 98 sind. Dies erlaubt eine automatisierte Herstellung mit sehr kurzen Zykluszeiten, welche im Wesentlichen durch die Zeit für das Einspritzen des Kunststoffs, die Zeit zum Teilaushärten des Kunststoffs und den Wechsel der Klemmleisten 96, jedoch ohne deren Entlade- und Beladungszeit, gegeben ist.

Weiter ist für die Herstellung von Zahnreinigungsgeräten 62 mit derselben Form des Handgriffs 60 jedoch einem andern Durchmesser des Drahtes 66 nur die Klemmleiste 96 mit einem entsprechend dem Durchmesser des Drahts 66 ausgebildeten Stieldurchlass 102 auszutauschen. Während der Kavitätskörper 98 in der Spritzgussmaschine verbleiben kann.

Die Verwendung einer vom Kavitätskörper 98 getrennten Klemmleiste 96 hat den weiteren Vorteil, dass im erfindungsgemäßen Mehrkomponentenspritzgiessverfahren das Umlegen von dem zweiten Kavitätsabschnitt 112 in einen weiteren zweiten Kavitätsabschnitt, in welchen ein zweiter Kunststoff eingespritzt wird, mittels der Klemmleiste 96 erfolgen kann.

Da ein den betreffenden Teil der Nut 108 formender umlaufender Wulst der Klemmleiste 96 in diese Nut 108 des hergestellten Handgriffs 60 eingreift, ist das Zahnreinigungsgerät 62 in der Klemmleiste 96 sicher gehalten, um bei geöffnetem Kavitätskörper 98 den Handgriff 60 aus dem zweiten Kavitätsabschnitt 112 zu entfernen.

Bevorzugt wird somit in eine geöffnete Klemmleiste 96 der Interdental-Behandlungsteil 68, beziehungsweise die entsprechende Anzahl Interdental-Behandlungsteile 68, eingesetzt und die Klemmleiste 96 geschlossen. Anschliessend wird die geschlossene Klemmleiste 96 in Anlage an den bereits geschlossenen oder noch zu schliessenden Kavitätskörper 98 gebracht und dann der Kunststoff in die Kavität 94 eingespritzt. Sobald dieser Kunststoff teilausgehärtet ist, d.h. soweit ausgehärtet, dass der Handgriff 60 formstabil ist, wird der Kavitätskörper 98 geöffnet und die immer noch geschlossene Klemmleiste 96 vom Kavitätskörper 98 entfernt, wobei die Bewegungsrichtung mindestens anfänglich quer, vorzugsweise rechtwinklig zur Trennebene 92 erfolgt. Dadurch wird der Handgriff 60 aus dem zweiten Kavitätsabschnitt 112 entfernt. Die Klemmleiste 96 wird in eine vom Kavitätskörper 98 entfernten Position gebracht, während gleichzeitig eine neue, beladene Klemmleiste 96 an den Kavitätskörper 98 in Anlage gebracht wird. In der genannten Position wird dann die Klemmleiste 96 geöffnet und wird ihr das fertige Zahnreinigungsgerät 62 entnommen.

Selbstverständlich ist es auch denkbar, die Teile der Klemmleiste 96 mit den entsprechenden Teilen des Kavitätskörpers 98 integral auszubilden. Dabei gehen jedoch die Vorteile betreffend kurzer Zykluszeiten und dem Austausch nur der Klemmleiste 96 für die Herstellung von Zahnreinigungsgeräten 62 mit einem unterschiedlichen Durchmesser des Drahts 66 verloren.

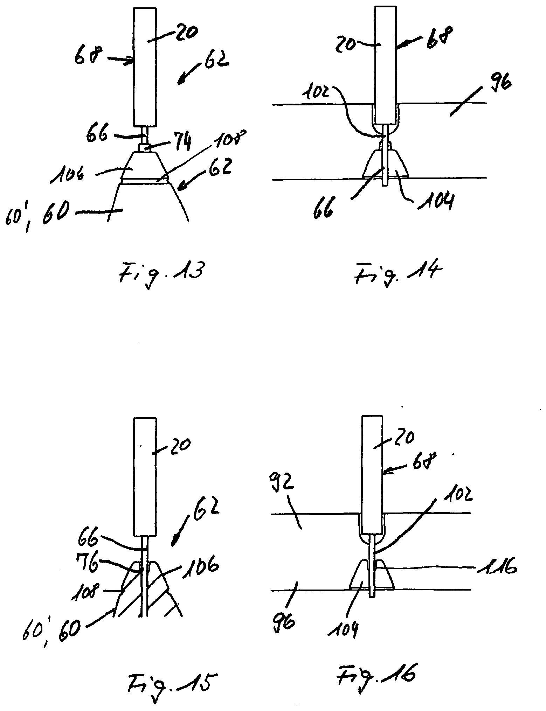

Fig. 13 zeigt in Ansicht einen Teil des Zahnreinigungsgeräts 62 gemäss Fig. 7 mit dem schlauchartigen Fortsatz 74 und Fig. 14 zeigt, in gleicher Darstellung wie Fig. 11, die zur Herstellung dieser Ausführungsform geeignete Klemmleiste 96. Diese ist genau gleich ausgebildet wie im Zusammenhang mit den Fig. 9 bis 11 beschrieben, wobei einzig der erste Kavitätsabschnitt 104 entsprechend der Form des Fortsatzes 74 und der Stieldurchlass 102 etwas kürzer ausgebildet sind. Das Verfahren zur Herstellung dieses Zahnreinigungsgeräts 62 verläuft auf genau gleiche Art und Weise, wie im Zusammenhang mit den Fig. 10 bis 12 beschrieben.

Zur Herstellung von Zahnreinigungsgeräten 62, wie sie in den Fig. 8 und 15 gezeigt sind, ist jedoch zum Entformen eine Hubbewegung des Zahnreinigungsgeräts 62 in Richtung des Stiels 64 in Richtung in den ersten Kavitätsabschnitt 104, beziehungsweise in die Kavität 94, hinein notwendig. Die Klemmleiste 96 und der Kavitätskörper 98 sind in genau gleicher Art und Weise ausgebildet, wie im Zusammenhang mit den Fig. 9 bis 11 beschrieben, wobei nun jedoch die Klemmleiste 96 einen der Vertiefung 76 entsprechenden - vergleiche Fig. 8 - in Richtung in die Kavität 94 hinein vorstehenden Vorsprung 116 aufweist. Auch hier erfolgt das Beladen der Klemmleiste 96 mit dem Interdental-Behandlungsteil 68 auf die oben beschriebene Art und Weise. Nach dem Spritzen des Handgriffs 60 wird, nach dem Öffnen des Kavitätskörpers 98, die Klemmleiste 96 von der Anlage am Kavitätskörper 98 entfernt und dann geöffnet. Die genannte Hubbewegung des Zahnreinigungsgeräts 62, um den Handgriff 60 aus dem Bereich des Vorsprungs 116 zu entfernen, erfolgt entweder vor dem Öffnen der Klemmleiste 96 oder während des Öffnens dieser Klemmleiste. Die Hubbewegung kann entweder durch Stossen am Behandlungskopf 20 oder durch Ziehen am Handgriff 60 erfolgen. In bevorzugter Weise wird jedoch die Hubbewegung durch die Öffnungsbewegung der Klemmleiste 96 selber in einer Richtung rechtwinklig zur Trennebene 92 erzeugt. Dazu dient die in Richtung zum freien Ende hin sich verjüngende Form des Vorsprungs 116 und die entsprechende sich erweiternde Form der Vertiefung 76 des Handgriffs 60.

Selbstverständlich kann eine Hubbewegung auch bei den Ausführungsformen gemäss den Fig. 9 bis 14 erfolgen.

Wie weiter oben beschrieben, verhindert der in die Nut 108 eingreifende Wulst der Klemmleiste 96 ein ungewolltes Herausfallen des Zahnreinigungsgeräts 62 aus der Klemmleiste 96. Diese Wulst bildet somit eine Art Verankerungselement, wobei die Wulst nicht zwingend in Umfangsrichtung ununterbrochen umlaufen muss. Entsprechend ist jedoch auch denkbar, dass der erste Kavitätsabschnitt 104 einen umlaufenden wulstartige Erweiterung aufweist, welcher durch eine Nut an der Klemmleiste 96 gebildet wird, wobei diese wiederum nicht zwingend ununterbrochen ausgeführt sein muss. Als eine andere Art Verankerungselemente sind beispielsweise in axialer Richtung oder schräg dazu verlaufende Nuten beziehungsweise Wulste an der Klemmleiste 96 möglich.

Selbstverständlich ist der Behandlungskopf 20 vom Befestigungsabschnitt 72 um ein derartiges Mass distanziert, dass die genannte Hubbewegung von beispielsweise maximal 3 mm vorzugsweise jedoch maximal 2 mm ausgeführt werden kann, ohne dass der Behandlungskopf durch Anliegen an der Klemmleiste 96 beschädigt wird.

Die Distanz entspricht somit wenigstens der Länge des Stieldurchlasses 102 und, im Falle der Ausführung einer Hubbewegung, zusätzlich dem Hub der Hubbewegung.

Um die Hubbewegung durch das Öffnen der Klemmleiste 96 erzeugen zu können, weist der Vorsprung 116 an seiner radial aussen liegenden Mantelfläche einen vorzugsweise konischen Abschnitt mit einer Steigung von 10° vorzugsweise durch mindestens 20° auf.

Es ist auch möglich, auf die oben dargelegte Art und Weise den Handgriff 60 als Halteteil 60' auszubilden, das dazu bestimmt ist, unlösbar oder lösbar an einem Handgrifforgan befestigt zu werden.

## Patentansprüche

1. Verfahren zum Herstellen einer Bürste für den Körperpflegebereich mittels eines Mehrkomponenten-Spritzgiessverfahrens mit einem Spritzgusswerkzeug (90) aufweisend eine Klemmleiste (96) sowie einen Kavitätskörper (98), wobei die Klemmleiste (96) einen ersten Kavitätsabschnitt (104) einer Kavität (94) des Spritzgusswerkzeugs (90) ausbildet und der Kavitätskörper (98) einen zweiten Kavitätsabschnitt (112) der Kavität (94) des Spritzgusswerkzeugs (90) ausbildet, wobei das Verfahren die folgenden Schritte umfasst:
(a) Einsetzen eines aus Draht (66) gefertigten Stiels (64), welcher einen Behandlungskopf (20) trägt, in einen Stieldurchlass (102) der Klemmleiste (96) des Spritzgusswerkzeugs (90), so dass er mit einem Befestigungsabschnitt (72), welcher sich in einer Distanz zum Behandlungskopf (20) befindet, in die Kavität (94) hineinragt;
(b) Schliessen des Spritzgusswerkzeugs, wobei die geschlossene Klemmleiste (96) am geschlossenen Kavitätskörper (98) zum Anliegen kommt;
(c) Einspritzen eines ersten Kunststoffs in die Kavität (94), wodurch der Befestigungsabschnitt (72) des Drahts (66) umspritzt wird, wobei ein Halteteil (60') hergestellt wird und wobei anschliessend an einen Endbereich (106) des Halteteils (60') eine Nut (108) ausgebildet wird, wobei der eine Teil der Nut (108) durch den ersten Kavitätsabschnitt (104) an der Klemmleiste (96) geformt wird und der andere Teil der Nut (108) durch den zweiten Kavitätsabschnitt (112) geformt wird;
(d) teilweises Aushärten des eingespritzten Kunststoffs;
(e) Umlegen von dem zweiten Kavitätsabschnitt (112) in einen weiteren zweiten Kavitätsabschnitt, wobei ein den betreffenden Teil der Nut (108) formender umlaufender Wulst der Klemmleiste (96) in die Nut (108) des hergestellten Halteteils (60') eingreift, so dass dieses in der Klemmleiste (96) sicher gehalten ist;
(f) Einspritzen eines zweiten Kunststoffs in den weiteren zweiten Kavitätsabschnitt.

2. Verfahren nach Anspruch 1, wobei der erste Kunststoff der gespritzt wird ein Hartkunststoff zur Bildung des Halteteils (60') ist.

3. Verfahren nach einem der Ansprüche 1 bis 2, wobei der zweite Kunststoff der gespritzt wird ein Weichkunststoff ist.

4. Verfahren nach einem der vorhergehenden Ansprüche, wobei die Bürste für den Körperpflegebereich ein einen Interdental-Behandlungsteil aufweisendes Zahnreinigungsgerät oder eine Maskara-Bürste umfasst.

## Claims

1. Method of producing a personal-care brush by means of multi-component injection moulding using an injection mould (90) having a clamping bar (96) and a cavity body (98), wherein the clamping bar (96) forms a first cavity portion (104) of a cavity (94) of the injection mould (90) and the cavity body (98) forms a second cavity portion (112) of the cavity (94) of the injection mould (90), wherein the method comprises the following steps:
(a) a stem (64), which is produced from wire (66) and carries a treatment head (20), is inserted into a stem through-passage (102) of the clamping bar (96) of the injection mould (90), and it therefore projects into the cavity (94) by way of a fastening portion (72), which is spaced apart from the treatment head (20);
(b) the injection mould is closed, wherein the closed clamping bar (96) ends up butting against the closed cavity body (98);
(c) a first plastics material is injected into the cavity (94), as a result of which the fastening portion (72) of the wire (66) is encapsulated by injection moulding, wherein a retaining part (60') is produced, and wherein a groove (108) is then formed at an end region (106) of the retaining part (60'), wherein the one part of the groove (108) is formed by the first cavity portion (104) on the clamping bar (96) and the other part of the groove (108) is formed by the second cavity portion (112);
(d) the plastics material which has been injected in is partially cured;
(e) changeover takes place from the second cavity portion (112) into a further second cavity portion, wherein an encircling bead of the clamping bar (96), said bead forming the relevant part of the groove (108), engages in the groove (108) of the retaining part (60') produced, said retaining part therefore being retained securely in the clamping bar (96); and
(f) a second plastics material is injected into the further second cavity portion.

2. Method according to Claim 1, wherein the first plastics material to be injected is a hard plastics material for forming the retaining part (60').

3. Method according to one of Claims 1 or 2, wherein the second plastics material to be injected is a soft plastics material.

4. Method according to one of the preceding claims, wherein the personal-care brush comprises a tooth-cleaning device having an interdental-treatment part or comprises a mascara brush.

## Revendications

1. Méthode pour la fabrication d'une brosse de soins personnels par moulage par injection à plusieurs composants avec un outil de moulage par injection (90) présentant une latte de serrage (96) et un corps de cavité (98), la latte de serrage (96) formant une première partie de cavité (104) d'une cavité (94) de l'outil de moulage par injection (90) et le corps de cavité (98) formant une deuxième partie de cavité (112) de la cavité (94) de l'outil de moulage par injection (90), la méthode comprenant les étapes suivantes:
(a) introduire un manche (64) fabriqué à partir d'un fil (66) et portant une tête de traitement (20) à travers un passage de manche (102) de la latte de serrage (96) de l'outil de moulage par injection (90) de telle sorte qu'il dépasse dans la cavité (94) avec une section de fixation (72) qui se trouve à une distance de la tête de traitement (20);
(b) fermer l'outil de moulage par injection, la latte de serrage (96) fermée étant en contact avec le corps de cavité (98) fermé;
(c) injecter une première matière plastique dans la cavité (94), ce par quoi la section de fixation (72) du fil (66) est surmoulée par injection, une partie de saisie (60') étant fabriquée et une rainure (108) étant ensuite formée à une zone d'extrémité (106) de la partie de saisie (60'), la une partie de la rainure (108) étant formée par la première partie de cavité (104) sur la latte de serrage (96) et l'autre partie de la rainure (108) étant formée par la deuxième partie de cavité (112);
(d) durcir partiellement la matière plastique injectée;
(e) changer de la deuxième partie de cavité (112) dans une autre deuxième partie de cavité, un boudin circonférentiel de la latte de serrage (96), le dit boudin formant la partie concernée de la rainure (108), s'engageant dans la rainure (108) de la partie de saisie (60') fabriquée, de telle sorte que la partie de saisie soit tenue de façon sûre dans la latte de serrage (96); et
(f) injecter une deuxième matière plastique dans l'autre deuxième partie de cavité.

2. Méthode selon la revendication 1, la première matière plastique injectée étant une matière plastique dure pour former la partie de saisie (60').

3. Méthode selon l'une des revendications 1 ou 2, la deuxième matière plastique injectée étant une matière plastique souple.

4. Méthode selon l'une des revendications précédentes, la brosse de soins personnels comprenant un dispositif pour le nettoyage des dents présentant une partie de traitement interdental ou comprenant une brosse à mascara.
